(19) Europäisches Patentamt
European Patent Office
Office européen des brevets

(11) **EP 3 524 493 B1**

(12) **EUROPEAN PATENT SPECIFICATION**

(45) Date of publication and mention
of the grant of the patent:
**07.07.2021  Bulletin 2021/27**

(51) Int Cl.:
***B62D 9/00*** *(2006.01)*

(21) Application number: **18155991.5**

(22) Date of filing: **09.02.2018**

(54) **STEERING METHOD FOR A VEHICLE**

LENKVERFAHREN FÜR EIN FAHRZEUG

PROCÉDÉ DE DIRECTION POUR VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.08.2019  Bulletin 2019/33**

(73) Proprietors:
• **Volkswagen AG
38440 Wolfsburg (DE)**
• **Scania CV AB
151 87 Södertälje (SE)**

(72) Inventors:
• **Marx, Peter
38553 Wasbüttel (DE)**

• **Kreis, Christopher
38126 Braunschweig (DE)**
• **Blumberg, Stefan
38126 Braunschweig (DE)**
• **Rothhämel, Malte
14142 Huddinge (SE)**

(74) Representative: **Gulde & Partner
Patent- und Rechtsanwaltskanzlei mbB
Wallstraße 58/59
10179 Berlin (DE)**

(56) References cited:
**EP-A1- 2 599 677       EP-A2- 1 010 577
WO-A1-2013/060898       DE-A1- 10 003 564
DE-A1- 10 244 068       DE-A1-102008 046 007
US-A1- 2008 011 539**

## Description

The invention relates to a method of supporting a steering process of a vehicle according to the main body of claim 1, a control system for a vehicle according to the main body of claim 12 and a vehicle suitable to be used in the method according to the main body of claim 13.

In the technical field of vehicles, in particular utility vehicles, it is known to equip the vehicle with a steering support system, such as a hydraulic steering support system. Further, most modern vehicles are equipped with an electric power steering (EPS) and normally also with an electronic stability control (ESC/ESP) system. The steering support system normally is a primary steering support system due to the requirement of providing backup systems. In case of a malfunction, a secondary backup system is required to assure safe steering behavior of the vehicle.

Known technical solutions cover the use of a secondary hydraulic steering support system or the use of electrical actuators as a secondary system. DE 10 2008 046 007 A1 is considered the closest prior-art-document and illustrates such a secondary steering support system, wherein a brake moment is selectively applied to the wheels in order to achieve a desired steering behavior in turn. DE 10 2015 014 882 A1 and DE 603 15 766 T2 disclose similar systems. US 2008/011539 A1 discloses a steering column that is linked to a steering gear comprising a rack and a pinion.

However, the known technical solutions are of quite high complexity and accordingly, require a lot of space, mass and power for implementation. This also leads to high costs.

It is therefore an objective of the invention to provide an improved secondary steering method for a vehicle and a corresponding steering system that features reduced technical complexity. In particular, additional technical assemblies shall be avoided by using technical components, already existing in a state-of-the-art vehicle.

The objective is achieved by the subject-matter of the independent claims 1, 12 and 13. Preferred embodiments of the invention can be gained from the subject-matter of the dependent claims and from the description.

A first aspect of the invention relates to a method of supporting a steering process of a vehicle that is steerable by manipulating the orientation of at least two wheels via a steering wheel, a steering kinematics that comprises a steering column and a steering gear, with the steering column comprising an upper end portion facing the steering wheel, wherein an angle sensor is located at the upper end portion and/or an entrance of the steering gear and a lower end portion facing the steering gear, with the vehicle being equipped with at least one primary steering support system, wherein the method comprises at least the following steps:

- Detection of a malfunction of the primary steering support system;
- Using a control system of the vehicle to derive a driver's steering intention from a steering moment induced to the steering wheel by the driver;
- Determination of a brake moment required in a brake system of the vehicle to achieve a steering behavior that corresponds to the driver's steering intention;
- Induction of the brake moment to at least one wheel of the vehicle, so as to achieve the desired steering behavior.

According to the invention, the control system derives the steering moment from an upper steering angle of the upper end portion or the entrance of the steering gear delivered by the at least one angle sensor and from mechanical data of the steering kinematics being stored in the control system and further from a lower steering angle of the steering kinematics being measured or simulated.

At least one angle sensor may be located at the upper end portion of the steering gear and the mechanical data may comprise mechanical data of the steering column and the lower steering angle may be defined at the lower end portion of the steering column. Alternatively, the mechanical data may comprise mechanical data of a torsion bar of the steering gear and the lower steering angle may be defined as a torsion angle of the torsion bar measured at a steering gear output shaft. Of course, both methods of measuring the lower steering angle may be combined.

In other words, the method of the invention may be executed by enhancing the functionality of a controllable braking system, that may be any system known to a person skilled in the art that allows for selectively braking down certain wheels of the vehicle, such as an ESP system for example, featured by a state-of-the-art vehicle. Enhancing the functionality of the controllable braking system is preferably based on a respective software component. The control system may be a central or distributed control system that sends and receives the signals required for the method and executes the calculations to determine the steering moment. The steering moment is a value being most suitable to determine the driver's steering intention. Correlation between the steering moment and the driver's steering intention may be embodied by a mathematical function (and its derivations), for instance, wherein the driver's steering intention may be expressed by certain levels of the steering moment and the current direction of the steering moment. For example, a certain level of the steering moment at a current upper steering angle may deliver the information that the vehicle is moving in the desired direction. A higher level of the steering moment may express that the driver intends to steer the vehicle in a certain direction, additionally. The mathematical function may therefore take the steering moment and the upper steering angle as an input to make a decision, whether additional or less support by the brake system is required and in which direction. The respective data is preferably stored in the control device. A person skilled in the art is capable of performing required test drives to empirically achieve these data, for example. Since the actual value of the steering moment during movement of the vehicle shall be detected without an additional torque sensor, a known physical correlation between the steering moment and the torsion of the referenced section of the steering kinematics, that may be the steering column or the torsion bar, is used to calculate the steering moment as follows:

$$M_{steer} = (c_{steering\ column}\ or\ c_{torsion\ bar})^* \Delta\varphi,$$

with

$M_{steer}$: steering moment,
$c_{steering\ column}$: stiffness of the steering column,
$c_{torsion\ bar}$: stiffness of the torsion bar,
$\Delta\varphi$: torsion of the steering column between upper and lower end portions of the steering column or torsion of the torsion bar, respectively.

The stiffness of the steering column and the torsion bar are part of the known mechanical data of the vehicle. The torsion of the steering column, which means preliminary its elastic deformation due to the steering moment, is expressed by a difference between the upper and lower steering angle, both with respect to a common reference point. Accordingly, the following applies:

$$\Delta\varphi = \varphi_{upper} - \varphi_{lower1, 2},$$

with

$\varphi_{upper}$: upper steering angle, for example at the upper end portion or at the entrance of the steering gear,
$\varphi_{lower1, 2}$: lower steering angle referred to the lower end portion of the steering column ($\varphi_{lower1}$) or referred to the torsion angle of the torsion bar ($\varphi_{lower2}$).

$\varphi_{upper}$ is preferably measured by the existing angle sensor of the vehicle, normally provided by an ESP system. $\varphi_{lower1}$ is determined by direct or indirect measurement or simulated, which is further described below. Preferably, attention is also paid to a slackness that occurs in the steering column, and its influence is paid respect to in the calculation of $\Delta\varphi$. Accordingly, accuracy of the method is enhanced. $\varphi_{lower2}$ is directly measured at the steering gear output shaft, preferably by another angle sensor, based on the fact, that the correlation of the torsion moment occurring in the torsion bar and its torsion angle are very well known. Accordingly, if a reference point at the entrance of the steering gear, for example the steering gear input shaft, is taken, the torsion angle at the output of the steering gear directly delivers the torsion moment induced to the torsion bar, which is almost equal to the steering moment. The other angle sensor can be placed at the steering gear output shaft and still another angle sensor can be placed at the steering gear input shaft to measure the upper steering angle at the steering gear input shaft, which is the most direct method of determining the torsion of the torsion bar.

Advantageously, the method of the invention provides a very simple way of supporting the steering process in the vehicle, if the primary steering support system is not working properly. To execute the method of the invention, basically no additional hardware is required, as standard modules of the vehicle may be used, for example those of an ESP system. In particular, no additional torque sensor is required to determine the steering moment. Preferably, detection of the malfunction of the primary steering support system is done while the vehicle is moving. Preferably, induction of the brake moment to the at least one wheel is done to the vehicle while it is moving, so as to achieve the desired steering behavior.

The following embodiments are with reference to the mechanical data comprising mechanical data of the steering column with the lower steering angle being defined at the lower end portion of the steering column.

In a preferred embodiment of the method of the invention, the lower steering angle is measured by another angle sensor, located at the lower end portion of the steering column for direct measurement or located at the steering gear for indirect measurement. Indirect measurement of the lower steering angle refers to the other angle sensor not being directly mounted to the lower end portion of the steering column, but at a part mechanically linked to it.

Advantageously, this allows for very accurate identification of the lower steering angle, wherein an additional angle sensor can be implemented much easier than a torque sensor.
Preferably the other angle sensor is located at a steering gear input shaft. This way, torsion of the steering column between the upper and lower end portions of the steering column can be easily measured by comparing $\varphi_{upper}$ at the steering wheel and $\varphi_{lower}$ at the steering gear input shaft.

In an alternatively preferred embodiment of the method of the invention the lower steering angle is simulated. Simulation means a calculation starting at a given system condition and further being based on a known behavior of the system. In this embodiment, once the malfunction of the primary steering support system is detected, a last value of the steering moment delivered by the primary steering support system before malfunction is taken as an input value to the control system. Then a brake moment correlating with the input value is applied to the brake system, an initial value of the lower steering angle is calculated and then, the control system further simulates a change of the steering moment according to a measured change of at least the upper steering angle and a simulated change of the lower steering angle, based on respective correlation data, being stored in the control system.

Advantageously, this allows for determining the steering moment at a sufficient accuracy without any additional sensor. This embodiment is based on the assumption, that, in the first moment after failure of the primary steering support system, the steering direction of the wheels and the lower and upper steering angle are constant. The last known values of the steering moment and the current steering direction of the wheels, delivered by the primary steering support system, are then taken as an input for the method of the invention. A brake moment is applied to the wheels, according to the last known steering moment, in order to maintain the current steering situation after failure of the primary steering support system. If the driver now intends to change the steering direction, he applies a changing steering moment via the steering wheel, which is rotating accordingly thereby changing the upper steering angle. The steering moment is now unknown. To determine the steering moment, again a mathematical function based on empirical knowledge can be provided, delivering change of the lower steering angle and the steering moment, accordingly.

In a further preferred embodiment of the method of the invention, the vehicle comprises a yaw sensor measuring a yaw rate of the vehicle and a velocity sensor measuring a velocity of the vehicle and that the measured values are used to derive the orientation of the at least two wheels from respective correlation data, being stored in the control system, to achieve the lower steering angle.

The lower steering angle can be easily gained from the difference between the upper steering angle and the orientation of the at least two wheels via the steering gear. Advantageously, yaw sensors are commonly used in state-of-the-art-vehicles, so that no additional sensor is required.

In a further preferred embodiment of the method of the invention, the vehicle comprises a velocity sensor measuring a rotational speed of the at least two wheels of the vehicle that are used for steering and that the measured values are used to derive the orientation of the respective wheels from respective correlation data, being stored in the control system, to achieve the lower steering angle.

Since the wheels are moving on paths with different radii during cornering, the orientation of the wheels can be gained from their rotational speeds. Based on that, the lower steering angle can be easily gained from the difference between the upper steering angle and the orientation of the at least two wheels via the steering gear. Advantageously, no additional sensor is required for this embodiment, either.

In a further preferred embodiment of the method of the invention, the vehicle comprises at least one near field sensor acquiring environmental data and that a current direction of movement of the vehicle relatively to the environment is derived from the data and that the orientation of the at least two wheels is then derived from respective correlation data, being stored in the control system, to achieve the lower steering angle.

Since many state-of-the-art-vehicles comprise such near field sensors, for example cameras, ultra sonic sensors or GPS sensors, acquiring the environmental data is possible without additional sensors, dedicated to the method of the invention. Since a certain direction of movement correlates with a certain orientation of the wheels, the lower steering angle can be easily calculated.

In a further preferred embodiment of the method of the invention, the vehicle comprises a yaw sensor measuring a yaw rate of the vehicle which is compared to the driver's steering intention and the brake moment applied to the at least one wheel is adapted if a derivation of the current direction of movement of the vehicle and the driver's steering intention is detected.

This way, a control loop can be established to assure that the driver's steering intention is met.

In a further preferred embodiment of the method of the invention, the steering wheel, steering column and a steering gear are connected via cardan joints and that calibration of the mechanical data stored in the control device is accomplished at the beginning of each trip of the vehicle.

To do so, the control system may continuously analyze control- and measurement signals from the primary steering support system and the steering behavior of the vehicle. Based on this, the control system may simulate the method of supporting the steering process of the invention. The control system may compare the results of the simulation with the actual steering behavior of the vehicle and for example eliminate inaccuracies in the control system's software component regarding the mechanical data of the steering column. Reasons for these inaccuracies are for example non-linearities in the cardan joints or abrasive effects.

In a further preferred embodiment of the method of the invention, the method is executed by an ESP system of the vehicle, which is equipped with a respective software component.

Most state-of-the-art vehicles are already equipped with an ESP system. Therefore, the effort of implementing the method of the invention is significantly reduced.

A second aspect of the invention relates to a control system for a vehicle, equipped with a software component adapted to execute an inventive control method according to this description.

A third aspect of the invention relates to a vehicle, steerable by manipulating the orientation of at least two wheels via a steering wheel, a steering kinematics that comprises a steering column and a steering gear, with the steering column comprising an upper end portion facing the steering wheel, wherein an angle sensor is located at the upper end portion and/or an entrance of the steering gear, and a lower end portion facing the steering gear, with the vehicle being equipped with at least one primary steering support system, further comprising at least the following features:

- a control system, capable of detecting a malfunction of the primary steering support system and of deriving a driver's steering intention from a steering moment induced to the steering wheel by the driver and further of determining a brake moment required to achieve a steering behavior that corresponds to the driver's steering intention;
- a brake system;
- an operational connection between the control system and the brake system, so that the brake moment is inducible to at least one wheel of the vehicle upon a signal from the control system, so as to achieve the desired steering behavior.

According to the invention, the control system is equipped with a software component that allows for deriving the steering moment from an upper steering angle of the upper end portion or the entrance of the steering gear delivered by the at least one angle sensor and from mechanical data of the steering kinematics being stored in the control system and further from a lower steering angle of the steering kinematics being measured or simulated by the software component.

In a preferred embodiment of the vehicle of the invention, at least one angle sensor is located at the upper end portion and the mechanical data comprise mechanical data of the steering column and the lower steering angle is defined at the lower end portion of the steering column or the mechanical data comprise mechanical data of a torsion bar of the steering gear and the lower steering angle is defined as a torsion angle of the torsion bar measured at a steering gear output shaft.

In a preferred embodiment of the vehicle of the invention, at least the control system, the angle sensor, the brake system and the operational connection belong to an ESP system of the vehicle, which is equipped with the software component.

In a further preferred embodiment of the vehicle of the invention, the control system is an inventive control system according to this description.

To summarize the aspects of the invention in other words, it relates to a backup steering method of a vehicle, for example equipped with an ESP system. The backup steering method uses a brake system of the ESP to brake down selected wheels to support steering. The driver's steering intention is derived from a steering moment in the steering kinematics, which is a result of the forces attacking the wheels and the driver holding the steering wheel in position or moving the same. The steering moment is not measured, if a primary hydraulic or electric steering support system is malfunctioned. Instead, it is gained from the rotational position of the steering wheel compared to a rotational position a reference point along the the steering kinematics with respect to the mechanical stiffness of a referenced section of the steering kinematics. There are certain possibilities of determining the rotational position of the reference point, based on known vehicle data. The invention also relates to a control system of the vehicle and to the vehicle, both being adapted for the described method.

Brief Description of the Figures:

Fig. 1    shows a block diagram of a method of supporting a steering process of a vehicle according to the invention in a preferred embodiment; and

Fig. 2    shows components of a vehicle that are used in the method; and

Fig. 3    shows a vehicle according to the invention in a preferred embodiment.

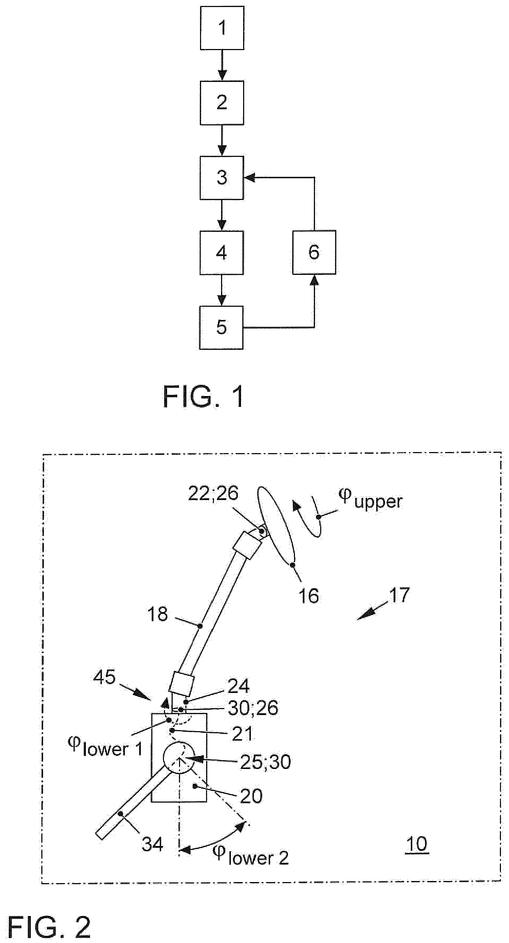

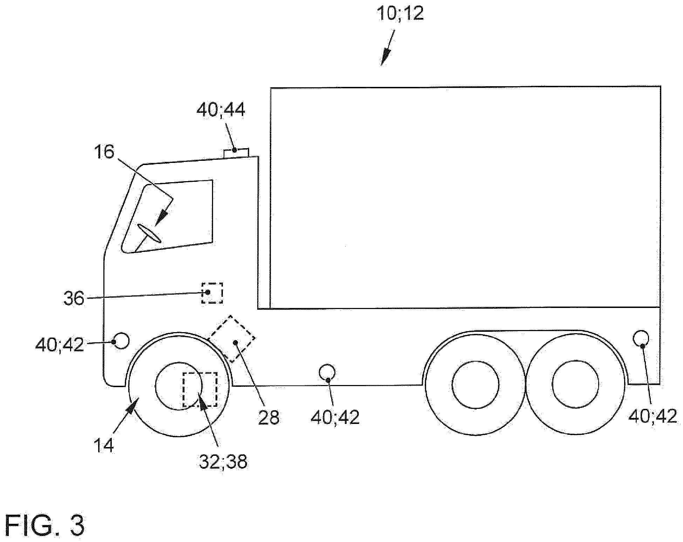

Figure 1 shows a block diagram of a method of supporting a steering process of a vehicle according to the invention. Reference is made to Figures 2 and 3 as they illustrate certain components of a vehicle used in the method.

Initially, a vehicle 10 is provided in step 1 of the method. The vehicle 10, as can be seen in Figure 3, is a motorized utility vehicle, such as a truck 12. It is steerable by manipulating the orientation of two wheels 14 located at the front of the vehicle 10. Steering is done manually via a steering wheel 16, as shown in Figure 2, which is linked to a steering column 18 and a steering gear 20, all part of a steering kinematics 17 of the vehicle 10. The steering column 18 comprises an upper end portion 22 and a lower end portion 24. The upper end portion 22 is equipped with an angle sensor 26 and located at an interface to the steering wheel 16. The lower end portion 24 is located at an interface to the steering gear 20, preferably being a steering gear input shaft. The steering gear 20 transmits the rotational steering movement of the steering column 18 into a steering movement of the wheels 14 via a torsion bar 21 and a steering lever 34. The vehicle 10 is equipped with an ESP system and with a primary steering support system, wherein the primary steering support system in this embodiment is a hydraulic power steering, even though electric power steering just as an example is also possible. The vehicle 10 has a control system 28, that belongs to the ESP system (Figure 3) or may belong to an alternative system known to a person skilled in the art that allows for selectively braking down certain wheels 14 of the vehicle 10. Just for the purpose of simple explanation it is referred to an ESP system in the following.

In a second step, the control system 28 detects a malfunction of the primary steering support system of the vehicle 10. The malfunction may be a loss of hydraulic pressure in the primary steering support system or another error case. In such a case, the method of the invention makes use of the ESP to apply a certain brake moment to selected wheels 14 in order to create a steering moment and thereby support the manual steering process of the driver.

To do so, in a third step the control system 28 of the vehicle 10 needs to figure out the driver's steering intention. Preferably, the steering moment in the steering kinematics 17, for example the steering column 18, is analyzed to conclude the driver's steering intention. However, due to the malfunction of the primary steering support system, the available data is limited. As can be seen in Figure 2, the ESP provides an angle sensor 26. The angle sensor 26 detects an upper steering angle $\varphi_{upper}$. The respective measurement value is detected by the control system 28. The control system 28 further has a data basis including the stiffness of the steering column 18, $c_{steering\ column}$ or the torsion bar 21, $c_{torsion\ bar}$. Further, an algorithm is implemented in the control system 28 that allows for calculation of the steering moment occurring inside the steering column 18 or the torsion bar 21 based on the following equations: $M_{steer}$ = ($c_{steering\ column}$ or $c_{torsion\ bar}$) $\Delta\varphi$ with $\Delta\varphi$ = ($\varphi_{upper}$ - $\varphi_{lower1,\ 2}$). $\Delta\varphi$ describes the torsion of the steering column 18 between the upper end portion 22 and lower end portion 24 of the steering column 18 or the torsion of the torsion bar 21, respectively. To achieve the steering moment $M_{steer}$, the value of $\varphi_{lower1,\ 2}$ is required. In this embodiment, the value of $\varphi_{lower1,\ 2}$ is measured by another angle sensor 30 which is located at the lower end portion 24 of the steering column 18 or the steering gear output shaft 25, respectively, and directly measures the value of $\varphi_{lower1,\ 2}$. Regarding $\varphi_{lower2}$, if the stiffness of the steering columns 18 is much higher than that of the torsion bar 21, either the difference between the upper steering angle $\varphi_{upper}$ at the upper end portion 22 or at the entrance of the steering gear 45 may be directly used for the calculation of the steering moment $M_{steer}$ in combination with $\varphi_{lower2}$. If the stiffness of the steering columns 18 and that of the torsion bar 21 are similar, it is preferred to measure $\varphi_{upper}$ at the entrance of the steering gear 45. A person skilled in the art independently decides which variant fits the accuracy requirements of the calculation. Among other possibilities of determining value of $\varphi_{lower1,\ 2}$ direct measurement with an angle sensor 26, 30 is the most accurate one and the effort is low at the same time. Based on the steering moment $M_{steer}$ and the upper steering angle $\varphi_{upper}$ as an input, the control system 28 decides the level of brake moment required on each of the wheels 14.

Accordingly, in a fourth step, the control system 28 induces the required brake moment to the respective wheels 14 via a brake system 32 of the vehicle 10, so as to achieve the desired steering behavior.

The vehicle 10 further comprises a yaw sensor 36, continuously measuring a yaw rate of the vehicle 10. In a fifth step, this yaw rate is compared to the driver's steering intention and the current brake moment applied to the respective wheels 14. If the vehicle is moving in the desired direction, which may for example be detected when the steering moment $M_{steer}$ in the referenced section of the steering kinematics 17 is zero and the upper steering angle does not change, the current brake moment is maintained.

A different value of the steering moment $M_{steer}$ or a changing upper steering angle $\varphi_{upper}$ may express that the driver intends to steer the vehicle 10 in a certain direction more or less intensely. In this case, in a sixth step, the brake moment is adapted according to the derivation of the current direction of movement of the vehicle 10 and the driver's steering intention.

In other embodiments, determination of ($\varphi_{lower1}$ may be done differently in step three of the method. For example, the other angle sensor 30 can be implemented in the steering gear 20. In this case, the other angle sensor 30 indirectly measures the value of $\varphi_{lower1}$ which can be calculated by the control system 28 taking into account the transmission of the steering gear 20.

In yet another embodiment, the yaw sensor 36 in combination with a velocity sensor 38 can be used. A measured yaw rate and velocity of the vehicle 10 are used to derive the orientation of the at least two wheels 14 from respective correlation data, being stored in the control system 28, to achieve the lower steering angle $\varphi_{lower1}$. Yaw rate and velocity of the vehicle 10 are describing a path the vehicle 10 is moving along. The correlation data may comprise certain moving paths that belong to certain orientations of the wheels 14 and velocities.

In yet another embodiment the velocity sensor 38 measures a rotational speed of the wheels 14. As two wheels 14 on the same axis feature a specific difference in their rotational speed during a curve, the orientation of the respective wheels 14 can be gained.

In yet another embodiment one or more near field sensors 40 can be used to acquire environmental data to determine a current direction of movement of the vehicle 10 relatively to the environment. Again, from a moving path of the vehicle 10, orientation of the wheels 14 can be derived. The near field sensors 40 can be a camera 42 or a GPS sensor 44, for example.

**Reference list**

10     vehicle
12     truck
14     wheels
16     steering wheel
17     steering kinematics
18     steering column
20     steering gear
21     torsion bar
22     upper end portion
24     lower end portion
25     steering gear output shaft

| 26 | angle sensor |
| 28 | control system |
| 30 | other angle sensor |
| 32 | brake system |
| 34 | steering lever |
| 36 | yaw sensor |
| 38 | velocity sensor |
| 40 | near field sensor |
| 42 | camera |
| 44 | GPS sensor |
| 45 | entrance of the steering gear |

| $C_{steering\ column}$ | stiffness of the steering column |
| $M_{steer}$ | steering moment |
| $\varphi_{lower1}$ | lower steering angle |
| $\varphi_{lower2}$ | lower steering angle |
| $\varphi_{upper}$ | upper steering angle |

**Claims**

1. Method of supporting a steering process of a vehicle (10) that is steerable by manipulating the orientation of at least two wheels (14) via a steering wheel (16), a steering kinematics (17) that comprises a steering column (18) and a steering gear (20), with the steering column (18) comprising an upper end portion (22) facing the steering wheel (16), wherein an angle sensor (26) is located at the upper end portion (22) and/or an entrance of the steering gear (45), and a lower end portion (24) facing the steering gear (20), with the vehicle (10) being equipped with at least one primary steering support system, wherein the method comprises at least the following steps:

    - Detection of a malfunction of the primary steering support system;
    - Using a control system (28) of the vehicle (10) to derive a driver's steering intention from a steering moment (Msteer) induced to the steering wheel (16) by the driver;
    - Determination of a brake moment required in a brake system (32) of the vehicle (10) to achieve a steering behavior that corresponds to the driver's steering intention;
    - Induction of the brake moment to at least one wheel (14) of the vehicle (10), so as to achieve the desired steering behavior;
    **characterized in that**
    the control system (28) derives the steering moment ($M_{steer}$) from an upper steering angle ($\varphi_{upper}$) of the upper end portion (22) or the entrance of the steering gear (45) delivered by the at least one angle sensor (26) and from mechanical data of the steering kinematics (17) being stored in the control system (28) and further from a lower steering angle ($\varphi_{lower1,\ 2}$) of the steering kinematics (17) being measured or simulated.

2. Method according to claim 1, **characterized in that** at least one angle sensor (26) is located at the upper end portion (22) and the mechanical data comprise mechanical data of the steering column (18) and the lower steering angle ($\varphi_{lower1}$) is defined at the lower end portion (24) of the steering column (18).

3. Method according to claim 2, **characterized in that** the lower steering angle ($\varphi_{lower1}$) is measured by another angle sensor (30), located at the lower end portion (24) of the steering column (18) for direct measurement or located at the steering gear (20) for indirect measurement.

4. Method according to claim 2, **characterized in that** once the malfunction of the primary steering support system is detected, a last value of the steering moment ($M_{steer}$) delivered by the primary steering support system before malfunction is taken as an input value to the control system (28), then a brake moment correlating with the input value is applied to the brake system (32) and an initial value of the lower steering angle ($\varphi_{lower1}$) is calculated and then, the control system (28) further simulates a change of the steering moment ($M_{steer}$) according to a measured change of at least the upper steering angle ($\varphi_{upper}$) and a simulated change of the lower steering angle ($\varphi_{lower1}$), based on respective correlation data, being stored in the control system (28).

5. Method according to claim 2, **characterized in that** the vehicle (10) comprises a yaw sensor (36) measuring a yaw rate of the vehicle (10) and a velocity sensor (38) measuring a velocity of the vehicle (10) and that the measured values are used to derive the orientation of the at least two wheels (14) from respective correlation data, being stored in the control system (28), to achieve the lower steering angle ($\varphi_{lower1}$).

6. Method according to claim 2, **characterized in that** the vehicle (10) comprises a velocity sensor (38) measuring a rotational speed of the at least two wheels (14) of the vehicle (10) that are used for steering and that the measured values are used to derive the orientation of the respective wheels from respective correlation data, being stored in the control system (28), to achieve the lower steering angle ($\varphi_{lower1}$).

7. Method according to claim 2, **characterized in that** the vehicle (10) comprises at least one near field sensor (40) acquiring environmental data and that a current direction of movement of the vehicle (10) relatively to the environment is derived from the data and that the orientation of the at least two wheels (14) is then derived from respective correlation data, being stored in the control system (28), to achieve the lower steering angle ($\varphi_{lower1}$).

8. Method according to any one of the claims 2 to 7, **characterized in that** the vehicle (10) comprises a yaw sensor (36) measuring a yaw rate of the vehicle (10) which is compared to the driver's steering intention and the brake moment applied to the at least one wheel (14) is adapted if a derivation of the current direction of movement of the vehicle (10) and the driver's steering intention is detected.

9. Method according to any one of the claims 2 to 8, **characterized in that** the steering wheel (16), steering column (18) and a steering gear (20) are connected via cardan joints and that calibration of the mechanical data stored in the control device is accomplished at the beginning of each trip of the vehicle (10).

10. Method according to any one of the claims 2 to 9, **characterized in that** the method is executed by an ESP system of the vehicle (10), which is equipped with a respective software component.

11. Method according to claim 1, **characterized in that** the mechanical data comprise mechanical data of a torsion bar (21) of the steering gear (20) and the lower steering angle ($\varphi_{lower2}$) is defined as a torsion angle of the torsion bar (21) measured at a steering gear output shaft (25).

12. Control system (28) for a vehicle, equipped with a software component adapted to execute a control method according to any one of the preceding claims.

13. Vehicle (10), steerable by manipulating the orientation of at least two wheels (14) via a steering wheel (16), a steering kinematics (17) that comprises a steering column (18) and a steering gear (20), with the steering column (18) comprising an upper end portion (22) facing the steering wheel (16), wherein an angle sensor (26) is located at the upper end portion (22) and/or an entrance of the steering gear (45), and a lower end portion (24) facing the steering gear (20), with the vehicle (10) being equipped with at least one primary steering support system, further comprising at least the following features:

   - a control system (28), capable of detecting a malfunction of the primary steering support system and of deriving a driver's steering intention from a steering moment ($M_{steer}$) induced to the steering wheel (16) by the driver and further of determining a brake moment required to achieve a steering behavior that corresponds to the driver's steering intention;
   - a brake system (32);
   - an operational connection between the control system (28) and the brake system (32), so that the brake moment is inducible to at least one wheel (14) of the vehicle (10) upon a signal from the control system (28), so as to achieve the desired steering behavior;
   **characterized in that**
   the control system (28) is equipped with a software component that allows for deriving the steering moment ($M_{steer}$) from an upper steering angle ($\varphi_{upper}$) of the upper end portion (22) or the entrance of the steering gear (45) delivered by the at least one angle sensor (26) and from mechanical data of the a steering kinematics (17) being stored in the control system (28) and further from a lower steering angle ($\varphi_{lower1, 2}$) of the steering kinematics (17) being measured or simulated by the software component.

14. Vehicle (10) according to claim 13, **characterized in that** at least one angle sensor (26) is located at the upper end portion (22) and the mechanical data comprise mechanical data of the steering column (18) and the lower steering angle ($\varphi_{lower1}$) is defined at the lower end portion (24) of the steering column (18) or that the mechanical data comprise mechanical data of a torsion bar (21) of the steering gear (20) and the lower steering angle ($\varphi_{lower2}$) is defined as a torsion angle of the torsion bar (21) measured at a steering gear output shaft (25).

15. Vehicle (10) according to claim 13 or 14, **characterized in that** at least the control system (28), the angle sensor (26), the brake system (32) and the operational connection belong to an ESP system of the vehicle (10), which is equipped with the software component.

16. Vehicle (10) according to any one of the claims 13 to 15, **characterized in that** the control system (28) is a control system according to claim 12.

**Patentansprüche**

1. Verfahren zum Unterstützen eines Lenkvorgangs eines Fahrzeugs (10), das durch Manipulation der Ausrichtung von mindestens zwei Rädern (14) über ein Lenkrad (16) lenkbar ist, einer Lenkkinematik (17), die eine Lenksäule (18) und ein Lenkgetriebe (20) umfasst, wobei die Lenksäule (18) einen dem Lenkrad (16) zugewandten oberen Endabschnitt (22) umfasst, wobei an dem oberen Endabschnitt (22) und/oder einem Eingang des Lenkgetriebes (45) ein Winkelsensor (26) angeordnet ist und ein unterer Endabschnitt (24) dem Lenkgetriebe (20) zugewandt ist, wobei das Fahrzeug (10) mit mindestens einem primären Lenkunterstützungssystem ausgestattet ist, wobei das Verfahren mindestens die folgenden Schritte umfasst:

    - Erkennen einer Fehlfunktion des primären Lenkunterstützungssystems;
    - Verwenden eines Steuerungssystems (28) des Fahrzeugs (10) zum Ableiten einer Lenkabsicht des Fahrers aus einem durch den Fahrer an das Lenkrad (16) induzierten Lenkmoment ($M_{steer}$);
    - Bestimmen eines Bremsmoments, das in einem Bremssystem (32) des Fahrzeugs (10) erforderlich ist, um ein Lenkverhalten zu erreichen, das der Lenkabsicht des Fahrers entspricht;
    - Induzieren des Bremsmoments auf mindestens ein Rad (14) des Fahrzeugs (10), wodurch das gewünschte Lenkverhalten erreicht wird;
    **dadurch gekennzeichnet, dass**
    das Steuerungssystem (28) das Lenkmoment (Msteer) aus einem von dem mindestens einen Winkelsensor (26) gelieferten oberen Lenkwinkel ($\varphi_{upper}$) des oberen Endabschnitts (22) oder des Eingangs des Lenkgetriebes (45) und aus in dem Steuerungssystem (28) gespeicherten mechanischen Daten der Lenkkinematik (17) und ferner aus einem gemessenen oder simulierten unteren Lenkwinkel ($\varphi_{lower1,\,2}$) der Lenkkinematik (17) ableitet.

2.   Verfahren nach Anspruch 1, **dadurch gekennzeichnet, dass** mindestens ein Winkelsensor (26) am oberen Endabschnitt (22) angeordnet ist und die mechanischen Daten mechanische Daten der Lenksäule (18) umfassen und der untere Lenkwinkel ($\varphi_{lower1}$) am unteren Endabschnitt (24) der Lenksäule (18) definiert ist.

3.   Verfahren nach Anspruch 2, **dadurch gekennzeichnet, dass** der untere Lenkwinkel ($\varphi_{lower1}$) von einem anderen Winkelsensor (30) gemessen wird, der sich zur direkten Messung am unteren Endabschnitt (24) der Lenksäule (18) oder zur indirekten Messung am Lenkgetriebe (20) befindet.

4.   Verfahren nach Anspruch 2, **dadurch gekennzeichnet, dass** nach Erkennen der Fehlfunktion des primären Lenkunterstützungssystems ein letzter Wert des von dem primären Lenkunterstützungssystem vor der Fehlfunktion gelieferten Lenkmoments ($M_{steer}$) als Eingabewert für das Steuerungssystem (28) genommen wird, dann ein mit dem Eingabewert korrelierendes Bremsmoment auf das Bremssystem (32) aufgebracht wird und ein anfänglicher Wert des unteren Lenkwinkels ($\varphi_{lower1}$) berechnet wird und dann, das Steuerungssystem (28) ferner eine Änderung des Lenkmoments ($M_{steer}$) nach einer gemes-

senen Änderung mindestens des oberen Lenkwinkels ($\varphi_{upper}$) und einer simulierten Änderung des unteren Lenkwinkels ($\varphi_{lower1}$), basierend auf jeweiligen Korrelationsdaten, die in dem Steuerungssystem (28) gespeichert sind, simuliert.

5.   Verfahren nach Anspruch 2, **dadurch gekennzeichnet, dass** das Fahrzeug (10) einen Giersensor (36), der eine Gierrate des Fahrzeugs (10) misst, und einen Geschwindigkeitssensor (38), der eine Geschwindigkeit des Fahrzeugs (10) misst, umfasst, und dass die gemessenen Werte verwendet werden, um die Ausrichtung der mindestens zwei Räder (14) aus jeweiligen Korrelationsdaten abzuleiten, die in dem Steuerungssystem (28) gespeichert sind, um den unteren Lenkwinkel ($\varphi_{lower1}$) zu erreichen.

6.   Verfahren nach Anspruch 2, **dadurch gekennzeichnet, dass** das Fahrzeug (10) einen Geschwindigkeitssensor (38) umfasst, der eine Drehgeschwindigkeit der mindestens zwei Räder (14) des Fahrzeugs (10) misst, die zum Lenken verwendet werden, und dass die gemessenen Werte verwendet werden, um die Ausrichtung der jeweiligen Räder aus jeweiligen Korrelationsdaten abzuleiten, die in dem Steuerungssystem (28) gespeichert sind, um den unteren Lenkwinkel ($\varphi_{lower1}$) zu erreichen.

7.   Verfahren nach Anspruch 2, **dadurch gekennzeichnet, dass** das Fahrzeug (10) mindestens einen Nahfeldsensor (40) umfasst, der Umgebungsdaten erfasst, und dass aus den Daten eine aktuelle Bewegungsrichtung des Fahrzeugs (10) relativ zur Umgebung abgeleitet wird, und dass dann die Ausrichtung der mindestens zwei Räder (14) aus jeweiligen Korrelationsdaten abgeleitet wird, die in dem Steuerungssystem (28) gespeichert sind, um den unteren Lenkwinkel ($\varphi_{lower1}$) zu erreichen.

8.   Verfahren nach einem der Ansprüche 2 bis 7, **dadurch gekennzeichnet, dass** das Fahrzeug (10) einen Giersensor (36) umfasst, der eine Gierrate des Fahrzeugs (10) misst, die mit der Lenkabsicht des Fahrers verglichen wird, und das an dem mindestens einen Rad (14) aufgebrachte Bremsmoment angepasst wird, wenn eine Ableitung der aktuellen Bewegungsrichtung des Fahrzeugs (10) und der Lenkabsicht des Fahrers erkannt wird.

9.   Verfahren nach einem der Ansprüche 2 bis 8, **dadurch gekennzeichnet, dass** das Lenkrad (16), Lenksäule (18) und ein Lenkgetriebe (20) über Kardangelenke verbunden sind und dass zu Beginn jeder Fahrt des Fahrzeugs (10) eine Kalibrierung der in der Steuerungsvorrichtung gespeicherten mechanischen Daten durchgeführt wird.

10.   Verfahren nach einem der Ansprüche 2 bis 9, **da-**

**durch gekennzeichnet, dass** das Verfahren von einem ESP-System des Fahrzeugs (10) ausgeführt wird, das mit einer jeweiligen Softwarekomponente ausgestattet ist.

11. Verfahren nach Anspruch 1, **dadurch gekennzeichnet, dass** die mechanischen Daten mechanische Daten eines Torsionsstabs (21) des Lenkgetriebes (20) umfassen und der untere Lenkwinkel ($\varphi_{lower2}$) als ein an einer Abtriebswelle (25) des Lenkgetriebes gemessener Torsionswinkel des Torsionsstabs (21) definiert ist.

12. Steuerungssystem (28) für ein Fahrzeug, ausgestattet mit einer Softwarekomponente, die geeignet ist, ein Steuerungsverfahren nach einem der vorstehenden Ansprüche auszuführen.

13. Fahrzeug (10), das durch Manipulation der Ausrichtung von mindestens zwei Rädern (14) über ein Lenkrad (16) lenkbar ist, eine Lenkkinematik (17), die eine Lenksäule (18) und ein Lenkgetriebe (20) umfasst, wobei die Lenksäule (18) einen dem Lenkrad (16) zugewandten oberen Endabschnitt (22) umfasst, wobei an dem oberen Endabschnitt (22) und/oder einem Eingang des Lenkgetriebes (45) ein Winkelsensor (26) angeordnet ist und ein unterer Endabschnitt (24) dem Lenkgetriebe (20) zugewandt ist, wobei das Fahrzeug (10) mit mindestens einem primären Lenkunterstützungssystem ausgestattet ist, ferner umfassend mindestens die folgenden Merkmale:

- ein Steuerungssystem (28), das in der Lage ist, eine Fehlfunktion des primären Lenkunterstützungssystems zu erkennen und aus einem vom Fahrer am Lenkrad (16) induzierten Lenkmoment ($M_{steer}$) eine Lenkabsicht des Fahrers abzuleiten und ferner ein Bremsmoment zu bestimmen, das erforderlich ist, um ein Lenkverhalten zu erreichen, das der Lenkabsicht des Fahrers entspricht;
- ein Bremssystem (32);
- eine Wirkverbindung zwischen dem Steuerungssystem (28) und dem Bremssystem (32), sodass auf ein Signal von dem Steuerungssystem (28) das Bremsmoment auf mindestens ein Rad (14) des Fahrzeugs (10) induzierbar ist, um das gewünschte Lenkverhalten zu erreichen;
**dadurch gekennzeichnet, dass**
das Steuerungssystem (28) mit einer Softwarekomponente ausgestattet ist, die es ermöglicht, das Lenkmoment ($M_{steer}$) aus einem von dem mindestens einen Winkelsensor (26) gelieferten oberen Lenkwinkel ($\varphi_{upper}$) des oberen Endabschnitts (22) oder des Eingangs des Lenkgetriebes (45) und aus in dem Steuerungssystem (28) gespeicherten mechanischen Daten der Lenkkinematik (17) und ferner aus einem von der Softwarekomponente gemessenen oder simulierten unteren Lenkwinkel ($\varphi_{lower1,\,2}$) der Lenkkinematik (17) abzuleiten.

14. Fahrzeug (10) nach Anspruch 13, **dadurch gekennzeichnet, dass** mindestens ein Winkelsensor (26) am oberen Endabschnitt (22) angeordnet ist und die mechanischen Daten mechanische Daten der Lenksäule (18) umfassen und der untere Lenkwinkel ($\varphi_{lower1}$) am unteren Endabschnitt (24) der Lenksäule (18) definiert ist oder dass die mechanischen Daten mechanische Daten eines Torsionsstabs (21) des Lenkgetriebes (20) umfassen und der untere Lenkwinkel ($\varphi_{lower2}$) als ein an einer Abtriebswelle (25) des Lenkgetriebes gemessener Torsionswinkel des Torsionsstabs (21) definiert ist.

15. Fahrzeug (10) nach Anspruch 13 oder 14, **dadurch gekennzeichnet, dass** mindestens das Steuerungssystem (28), der Winkelsensor (26), das Bremssystem (32) und die Wirkverbindung zu einem ESP-System des Fahrzeugs (10) gehören, das mit der Softwarekomponente ausgestattet ist.

16. Fahrzeug (10) nach einem der Ansprüche 13 bis 15, **dadurch gekennzeichnet, dass** das Steuerungssystem (28) ein Steuerungssystem nach Anspruch 12 ist.

**Revendications**

1. Procédé de support d'un processus de direction d'un véhicule (10) orientable par manipulation de l'orientation d'au moins deux roues (14) par le biais d'un volant de direction (16), d'une cinématique de direction (17) comprenant une colonne de direction (18) et un boîtier de direction (20), la colonne de direction (18) comprenant une partie d'extrémité supérieure (22) orientée vers le volant de direction (16), un capteur d'angle (26) étant situé au niveau de la partie d'extrémité supérieure (22) et/ou d'une entrée du boîtier de direction (45), et une partie d'extrémité inférieure (24) orientée vers le boîtier de direction (20), le véhicule (10) étant muni d'au moins un système de support de direction primaire, le procédé comprenant au moins les étapes suivantes :

- détection d'un dysfonctionnement du système de support de direction primaire ;
- utilisation d'un système de commande (28) du véhicule (10) pour déduire une intention de direction d'un conducteur à partir d'un moment de direction ($M_{steer}$) appliqué au volant de direction (16) par le conducteur ;
- détermination d'un moment de freinage requis dans un système de freinage (32) du véhicule (10) pour obtenir un comportement de direction qui correspond à l'intention de direction du conducteur ;

- application du moment de freinage à au moins une roue (14) du véhicule (10), de manière à obtenir le comportement de direction souhaité ; **caractérisé en ce que**

le système de commande (28) déduit le moment de direction ($M_{steer}$) à partir d'un angle de braquage supérieur ($\varphi_{upper}$) de la partie d'extrémité supérieure (22) ou de l'entrée du boîtier de direction (45) fourni par l'au moins un capteur d'angle (26) et à partir de données mécaniques de la cinématique de direction (17) qui sont stockées dans le système de commande (28) et en outre à partir d'un angle de braquage inférieur ($\varphi_{lower1, 2}$) de la cinématique de direction (17) qui est mesuré ou simulé.

2. Procédé selon la revendication 1, **caractérisé en ce qu'**au moins un capteur d'angle (26) est situé au niveau de la partie d'extrémité supérieure (22) et les données mécaniques comprennent des données mécaniques de la colonne de direction (18) et l'angle de braquage inférieur ($\varphi_{lower1}$) est défini au niveau de la partie d'extrémité inférieure (24) de la colonne de direction (18).

3. Procédé selon la revendication 2, **caractérisé en ce que** l'angle de braquage inférieur ($\varphi_{lower1}$) est mesuré par un autre capteur d'angle (30), situé au niveau de la partie d'extrémité inférieure (24) de la colonne de direction (18) pour une mesure directe ou situé au niveau du boîtier de direction (20) pour une mesure indirecte.

4. Procédé selon la revendication 2, **caractérisé en ce que**, une fois le dysfonctionnement du système de support de direction primaire détecté, une dernière valeur du moment de direction ($M_{steer}$) fournie par le système de support de direction primaire avant le dysfonctionnement est prise comme valeur d'entrée pour le système de commande (28), puis un moment de freinage en corrélation avec la valeur d'entrée est appliqué au système de freinage (32) et une valeur initiale de l'angle de braquage inférieur ($\varphi_{lower1}$) est calculée et ensuite, le système de commande (28) simule en outre, un changement du moment de direction ($M_{direction}$) en fonction d'un changement mesuré d'au moins l'angle de braquage supérieur ($\varphi_{upper}$) et d'un changement simulé de l'angle de braquage inférieur ($\varphi_{lower1}$), sur la base de données de corrélation respectives stockées dans le système de commande (28).

5. Procédé selon la revendication 2, **caractérisé en ce que** le véhicule (10) comprend un capteur de lacet (36) mesurant une vitesse de lacet du véhicule (10) et un capteur de vitesse (38) mesurant une vitesse du véhicule (10) et **en ce que** les valeurs mesurées sont utilisées pour déduire l'orientation des au moins deux roues (14) à partir de données de corrélation respectives, stockées dans le système de commande (28), pour obtenir l'angle de braquage inférieur ($\varphi_{lower1}$).

6. Procédé selon la revendication 2, **caractérisé en ce que** le véhicule (10) comprend un capteur de vitesse (38) mesurant une vitesse de rotation des au moins deux roues (14) du véhicule (10) utilisées pour la direction et **en ce que** les valeurs mesurées sont utilisées pour déduire l'orientation des roues respectives à partir de données de corrélation respectives, stockées dans le système de commande (28), pour obtenir l'angle de braquage inférieur ($\varphi_{lower1}$).

7. Procédé selon la revendication 2, **caractérisé en ce que** le véhicule (10) comprend au moins un capteur de champ proche (40) qui acquiert des données environnementales et **en ce qu'**une direction de déplacement actuelle du véhicule (10) par rapport à l'environnement est déduite à partir des données et **en ce que** l'orientation des au moins deux roues (14) est ensuite déduite à partir de données de corrélation respectives, stockées dans le système de commande (28), pour obtenir l'angle de braquage inférieur ($\varphi_{lower1}$).

8. Procédé selon l'une quelconque des revendications 2 à 7, **caractérisé en ce que** le véhicule (10) comprend un capteur de lacet (36) mesurant une vitesse de lacet du véhicule (10), qui est comparée à l'intention de direction du conducteur et le moment de freinage appliqué à l'au moins une roue (14) est adapté si un écart entre la direction de déplacement actuelle du véhicule (10) et l'intention de direction du conducteur est détecté.

9. Procédé selon l'une quelconque des revendications 2 à 8, **caractérisé en ce que** le volant de direction (16), la colonne de direction (18) et un boîtier de direction (20) sont reliés par l'intermédiaire de joints de cardan et **en ce que** l'étalonnage des données mécaniques stockées dans le dispositif de commande s'effectue au début de chaque parcours du véhicule (10).

10. Procédé selon l'une quelconque des revendications 2 à 9, **caractérisé en ce que** le procédé est exécuté par un système ESP du véhicule (10), qui est équipé d'un composant logiciel respectif.

11. Procédé selon la revendication 1, **caractérisé en ce que** les données mécaniques comprennent des données mécaniques d'une barre de torsion (21) du boîtier de direction (20) et l'angle de braquage infé-

rieur ($\varphi_{lower2}$) est défini comme un angle de torsion de la barre de torsion (21) mesuré au niveau d'un arbre de sortie du boîtier de direction (25).

**12.** Système de commande (28) pour un véhicule, équipé d'un composant logiciel adapté pour exécuter un procédé de commande selon l'une quelconque des revendications précédentes.

**13.** Véhicule (10), orientable en manipulant l'orientation d'au moins deux roues (14) par le biais d'un volant de direction (16), d'une cinématique de direction (17) comprenant une colonne de direction (18) et un boîtier de direction (20), la colonne de direction (18) comprenant une partie d'extrémité supérieure (22) orientée vers le volant de direction (16), un capteur d'angle (26) étant situé au niveau de la partie d'extrémité supérieure (22) et/ou d'une entrée du boîtier de direction (45), et une partie d'extrémité inférieure (24) orientée vers le boîtier de direction (20), le véhicule (10) étant muni d'au moins un système de support de direction primaire, comprenant en outre au moins les éléments suivants :

- un système de commande (28), capable de détecter un dysfonctionnement du système de support de direction primaire et de déduire une intention de direction d'un conducteur à partir d'un moment de direction (Msteer) appliqué au volant de direction (16) par le conducteur et de déterminer en outre un moment de freinage requis pour obtenir un comportement de direction qui correspond à l'intention de direction du conducteur ;
- un système de freinage (32) ;
- une connexion opérationnelle entre le système de commande (28) et le système de freinage (32), de sorte que le moment de freinage soit applicable à au moins une roue (14) du véhicule (10) en réponse à un signal provenant du système de commande (28), de manière à obtenir le comportement de direction souhaité ;
**caractérisé en ce que**
le système de commande (28) est équipé d'un composant logiciel permettant de déduire le moment de direction ($M_{steer}$) à partir d'un angle de braquage supérieur ($\varphi_{upper}$) de la partie d'extrémité supérieure (22) ou de l'entrée du boîtier de direction (45) fourni par l'au moins un capteur d'angle (26) et à partir de données mécaniques de la cinématique de direction (17) qui sont stockées dans le système de commande (28) et en outre à partir d'un angle de braquage inférieur ($\varphi_{lower1, 2}$) de la cinématique de direction (17) qui est mesuré ou simulé par le composant logiciel.

**14.** Véhicule (10) selon la revendication 13, **caractérisé**

en ce qu'au moins un capteur d'angle (26) est situé au niveau de la partie d'extrémité supérieure (22) et les données mécaniques comprennent des données mécaniques de la colonne de direction (18) et l'angle de braquage inférieur ($\varphi_{lower1}$) est défini au niveau de la partie d'extrémité inférieure (24) de la colonne de direction (18) ou en ce que les données mécaniques comprennent des données mécaniques d'une barre de torsion (21) du boîtier de direction (20) et l'angle de braquage inférieur ($\varphi_{lower2}$) est défini comme un angle de torsion de la barre de torsion (21) mesuré au niveau d'un arbre de sortie du boîtier de direction (25).

**15.** Véhicule (10) selon la revendication 13 ou 14, **caractérisé en ce qu'**au moins le système de commande (28), le capteur d'angle (26), le système de freinage (32) et la connexion opérationnelle appartiennent à un système ESP du véhicule (10) qui est équipé du composant logiciel.

**16.** Véhicule (10) selon l'une quelconque des revendications 13 à 15, **caractérisé en ce que** le système de commande (28) est un système de commande selon la revendication 12.

FIG. 1

FIG. 2

FIG. 3

**EP 3 524 493 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008046007 A1
- DE 102015014882 A1
- DE 60315766 T2
- US 2008011539 A1